# EUROPÄISCHE PATENTANMELDUNG

(11) **EP 0 709 320 A1**
(43) Veröffentlichungstag der Anmeldung: **01.05.1996**
(21) Anmeldenummer: 95115586.0
(22) Anmeldetag: 03.10.1995
(51) Int. Cl.: B65G 57/11, B65G 57/04, B21D 43/22, B65G 54/02

(54) **Verfahren und Einrichtung zum Stapeln von Teilen aus elektrisch leitendem, nicht-ferromagnetischem Werkstoff, insbesondere von Aluminium-Dosendeckeln**

(30) Priorität: 28.10.1994 DE 4438499
(71) Anmelder: NSM MAGNETTECHNIK GMBH, D-59399 Olfen (DE)
(72) Erfinder: Kulik, Gerhard, D-59439 Holzwickede (DE); Watermeier, Theo, D-59399 Olfen (DE)
(74) Vertreter: Vollbach, Hans, Dipl.-Ing.

(57) **Zusammenfassung**

Die Erfindung betrifft ein Verfahren und eine Einrichtung zum Stapeln von Teilen aus elektrisch leitenden, nicht-ferromagnetischem Werkstoff, insbesondere von Aluminium-Dosendeckeln, wobei diese Teile (2) mittels einer Zuführvorrichtung (8) in Aufeinanderfolge einer Stapelstelle bzw. einem Stapelschacht (1) zugeführt und hier lagegerecht zu dem Stapelpaket (7) gestapelt werden. Nach der Erfindung ist im Zulaufbereich zu der Stapelstelle bzw. dem Stapelschacht (1) ein Wirbelstromerzeuger, vorzugsweise in Gestalt eines permanentmagnetischen Polrades (12) angeordnet, der die zulaufenden Teile (2) durch Wirbelstrombildung mit erhöhter Geschwindigkeit zur Stapelstelle bzw. in den Stapelschacht (1) treibt. Damit ist auch bei sehr hohen Arbeits- bzw. Stapelgeschwindigkeiten ein störungsfreier Betrieb möglich.

## Beschreibung

Die Erfindung betrifft ein Verfahren zum Stapeln von Teilen aus elektrisch leitendem, nicht-ferromagnetischem Werkstoff, insbesondere von Aluminium-Dosendeckeln u.dgl., wobei die Teile mittels einer Zuführvorrichtung in Aufeinanderfolge der Stapelstelle zugeführt und lagegerecht an die Stapelstelle übergeben werden. Ferner ist die Erfindung auf eine zweckdienliche Einrichtung zur Durchführung des Verfahrens gerichtet.

In der Emballagenindustrie stellt sich häufig die Forderung, Aluminium-Dosendeckel im Produktionsablauf an verschiedenen Stellen zu Deckelpaketen aufzustapeln. Hierzu ist es bekannt, einen vertikalen Stapelschacht zu verwenden, dem die Deckel in rascher Taktfolge von oben seitlich zugeführt werden. Der Stapelschacht kann dabei einen Unterdruck-Stapelkopf aufweisen, mit dessen Hilfe jeweils unter dem zuletzt eingebrachten Deckel ein Unterdruck erzeugt wird, so daß dieser Deckel im Stapelschacht nach unten in Ablage auf den bereits gebildeten Deckelstapel gezogen und damit der Kopfraum des Stapelschachtes für den Einlauf eines weiteren Deckels sofort wieder freigegeben wird.

Bei einer bekannten Stapeleinrichtung dieser Art mit Unterdruck-Stapelschacht werden die über einen Bandförderer in Aufeinanderfolge zugeführten Dosendeckel mittels eines im Übergabebereich dieses Bandförderers angeordneten endlosen Aufgabebandes von dessen Untertrum über eine Gleitbahn schleifend der Aufnahmeöffnung des Unterdruck-Stapelschachtes zugeführt und dabei im Kopfraum des Stapelschachtes mit Hilfe von gegenläufig umlaufenden Zahnrädern am Deckelrand erfaßt und vereinzelt in den Stapelschacht abgeworfen (DE 20 47 597 C2).

Bei den bekannten Deckel-Stapelsystemen kann für die Zuführung der Deckel zu dem Stapelschacht ein Vakuum-Transportband verwendet werden, an dem die Deckel in Flachlage aufliegend durch den erzeugten Unterdruck in ihrer Lage gehalten sind. Bei den geforderten hohen Arbeitsgeschwindigkeiten der Anlagen, die zumeist mit 1000 Deckeln/min. oder deutlich darüber liegen, bildet der Überleitungsbereich der Aluminium-Dosendeckel vom Vakuum-Transportband in den Stapelschacht eine kritische Stelle, an der es nicht selten zu Betriebsstörungen kommt. Bei Verwendung eines Vakuum-Transportbandes besteht ein wesentlicher Grund für solche Störungen im Deckel-Einlaufbereich darin, daß es nicht möglich ist, die Deckel mit Hilfe des Vakuum-Transportbandes bis zum Einlaufkopf des Stapelschachtes zu transportieren. Um Leckverluste und einen Zusammenbruch des Vakuums am Vakuum-Transportband zu vermeiden, muß das Vakuum im Abstand vor der dicht am Stapelschacht angeordneten Umlenkrolle des Transportbandes abgeschaltet bzw. unwirksam gemacht werden. Dies bedeutet, daß die Deckel bis zum Erreichen des Stapelschachtes einen verhältnismäßig langen Transportweg ohne Vakuumunterstützung zurücklegen müssen. Die Deckel werden folglich nicht zwangsgeführt in den Stapelschacht eingeworfen; sie können mehr oder weniger unkontrolliert in die Stapelstelle fliegen. Hierbei kann es durch Verkanten oder auch durch Umschlagen der Deckel zu Störungen in der Deckelzuführung und Deckelstapelung kommen.

Es versteht sich, daß die vorgenannten Schwierigkeiten bei der Überleitung der Stapelteile zur Stapelstelle in besonderem Maße dann bestehen, wenn, wie bei der Dosendeckelstapelung, mit sehr hohen Stapelgeschwindigkeiten gearbeitet wird. Bei Stapeleinrichtungen für plattenförmige Werkstücke, wie vor allem Akkumulatorplatten, ist es bekannt, die in Flachlage auf einem Förderband in Folge zugeführten Platten beim Verlassen des Förderbandes durch den Walzenspalt eines von zwei gegenläufigen rotierenden Walzen gebildeten Walzenförderers hindurchzuführen, so daß sie vom Walzenförderer gegen einen von einer Dämpfungsplatte gebildeten Anschlag getrieben werden und dann durch Schwerkraftwirkung, durch eine Führungskassette geführt, nach unten auf einen Schiebetisch abfallen, auf dem sie gestapelt werden (DE 27 05 509 A1).

Ausgehend von dem vorgenannten Stand der Technik liegt der Erfindung die Aufgabe zugrunde, ein Verfahren anzugeben, mit dem eine störungsfreie Stapelbildung von elektrisch leitenden, nicht-ferromagnetischen Teilen, wie vor allem von Aluminium-Dosendeckeln, auch bei sehr hohen Arbeitsgeschwindigkeiten ohne übermäßig großen baulichen Mehraufwand für das Stapelsystem möglich ist. Ferner bezweckt die Erfindung eine in dieser Hinsicht vorteilhafte Gestaltung einer Stapeleinrichtung.

Die vorgenannte Aufgabe wird mit dem erfindungsgemäßen Verfahren dadurch gelöst, daß den Teilen im Zulaufbereich zu der Stapelstelle durch Wirbelstrombildung ein Beschleunigungsimpuls in Richtung auf die Stapelstelle erteilt wird.

Nach dem erfindungsgemäßen Verfahren wird also den zu stapelnden Teilen, wie vor allem den genannten Aluminium-Dosendeckeln, im Zulaufbereich zum Stapelschacht bzw. seines Stapelkopfes durch Wirbelstromerzeugung ein Bewegungs- bzw. Beschleunigungsimpuls erteilt, so daß sie mit erhöhter Geschwindigkeit in den Stapelschacht getrieben und in diesem ordnungsgemäß abgestapelt werden. Die genannten Betriebsstörungen bei der Überführung der Teile in den Stapelschacht lassen sich auf diese Weise zuverlässig beheben und es ergibt sich zugleich die Möglichkeit, mit den vor allem in der Deckelproduktion geforderten hohen Arbeits- und Stapelgeschwindigkeiten zu arbeiten. Für die Zuführung der Teile zu dem vorzugsweise vertikal angeordneten Stapelschacht kann ein schnellaufendes Transportband, insbesondere ein für diese Zwecke bekanntes Vakuum-Transportband, verwendet werden, auf dem die Teile in Flachlage aufliegend befördert werden, um dann von der Seite her in den Kopfraum des Stapelschachtes eingeführt zu werden. Auf der Strecke zwischen der in Nähe des Stapelschachtes befindlichen Umlenkrolle des Transportbandes bzw. derjenigen Stelle, an der die Unterdruckwirkung auf die auf dem Transportband aufliegenden Teile abgeschaltet ist, und dem Einlauf am Stapelschacht befindet sich der Wirbelstromerzeuger, der die Teile auf dieser Strecke, also im Zulaufbereich zum Stapelschacht, beschleunigt, so daß sie mit erhöhter Geschwindigkeit, die zweckmäßig größer ist als die Transportgeschwindigkeit des Transportbandes, in den Kopfraum des Stapelschachtes getrieben werden.

Vorzugsweise wird für die Beschleunigung der Teile bzw. Deckel im Zulaufbereich zur Stapelstelle bzw. zum Stapelschacht ein angetriebenes, rotierendes Polrad verwendet, das um seine Drehachse herum mit hierzu radial ausgerichteten Permanentmagneten bestückt ist, deren außenliegende Magnetpole in Umfangsrichtung wechseln. Mit einem solchen rotierenden Polrad läßt sich auf die der Stapelstelle zulaufenden Teile durch Wirbelstrombildung in diesen eine Antriebs- bzw. Beschleunigungskraft ausüben, wobei das Polrad die Funktion eines Wirbelstrom-Antriebserzeugers hat. Das Polrad wird dabei mit einer solchen Drehgeschwindigkeit, die z.B. in der Größenordnung von 500-5000 U/min. liegt, angetrieben, das von ihm ein permanentmagnetisches Wechselfeld erzeugt wird, das in den genannten Teilen bzw. in den Deckeln einen Wirbelstrom erzeugt, der wiederum ein dem äußeren Wechselfeld entgegenwirkendes Wirbelstrom-Magnetfeld aufbaut, das aufgrund der magnetischen Abstoßung der Magnetfelder eine Beschleunigungskraft erzeugt, die die Teile bzw. Deckel zur Abstapelung in den Stapelschacht treibt.

Anstelle des bevorzugt vorgesehenen permanentmagnetischen Polrades könnte bei dem erfindungsgemäßen Verfahren als Wirbelstrombeschleuniger aber auch ein elektrischer Linearmotor verwendet werden, der ein entsprechend gerichtetes Drehstrom-Wanderfeld erzeugt, das über die Wirbelstrombildung einen gezielten Beschleunigungsimpuls auf die Teile in Richtung auf die Stapelstelle bewirkt.

Für die Durchführung des erfindungsgemäßen Verfahrens kann mit besonderem Vorteil eine Stapeleinrichtung mit einem Stapelschacht und eine Zuführvorrichtung Verwendung finden, mit der die Aluminium-Dosendeckel oder sonstige Teile aus dem genannten Werkstoff in Aufeinanderfolge dem Kopfraum des Stapelschachtes zugeführt werden, wobei erfindungsgemäß im Zulaufbereich zu dem Stapelschacht ein Wirbelstromerzeuger der genannten Art angeordnet ist, der den Stapelteilen auf der Zulaufstrecke einen in Zulaufrichtung wirkenden Wirbelstrom-Beschleunigungsimpinls erteilt. Dabei ist der Stapelschacht zweckmäßig mit einem Unterdruck-Stapelkopf versehen, so daß die von der Seite her in den Kopfraum des Stapelschachtes in rascher Taktfolge durch Wirbelstrombeschleunigung getriebenen Teile durch den erzeugten Unterdruck schlagartig nach unten zur Ablage auf das Stapelpaket gezogen werden und folglich der Eingangs- bzw. Kopfraum des Stapelschachtes sofort wieder für den Eintritt des nächsten zugeführten Stapelteils frei wird. Es empfiehlt sich im übrigen, die Stapelteile im Einlauf zu der Stapelstelle, also auf der durch Wirbelstrombildung bewirkten Beschleunigungsstrecke, mit Hilfe mechanischer Seitenführungen zuführen. Der Wirbelstromerzeuger bzw. das hierfür bevorzugt verwendete Polrad wird zweckmäßig mit seinem Antrieb einlaufseitig am Stapelschacht angebaut. Die Anordnung wird so getroffen, daß das Polrad von seinem Antrieb um eine horizontale Drehachse angetrieben werden kann, die quer zur Einlaufrichtung der Teile und auch quer zur Schachtachse verläuft. Es empfiehlt sich im übrigen, den Wirbelstromerzeuger bzw. das hierfür verwendete Polrad einlaufseitig im Kopfbereich des Stapelschachtes unterhalb einer Einlauf-Gleitplatte od.dgl. anzuordnen, über die hinweg die zu stapelnden Teile in den Kopfraum des Stapelschachtes gleiten. An der der Einlaufseite gegenüberliegenden Seite des Stapelschachtes wird vorteilhafterweise ein Dämpfungsanschlag angeordnet, gegen den die durch Wirbelstrombeschleunigung in den Stapelschacht getriebenen Teile stoßen und der dabei diese Teile nachgiebig bzw. elastisch abfängt. Dieser Dämpfungsanschlag kann aus einem einfachen Federelement oder aus einem weich-nachgiebigen Anschlagelement bestehen.

Für die Zuführvorrichtung, welche die zu stapelnden Teile der Stapelstelle bzw. dem Stapelschacht zuführt, wird zweckmäßig ein Transportband, vorzugsweise ein horizontales Vakuum-Transportband der für diese Zwecke bekannten Art, vorgesehen, auf dem die Teile in Flachlage und durch Unterdruck fixiert dem Stapelschacht und vor Erreichen desselben dem Wirkungsbereich des Wirbelstromerzeugers zugeführt werden.

Weitere Gestaltungsmerkmale der Erfindung sind in den einzelnen Ansprüchen angegeben.

Wie erwähnt, ist die Erfindung in ihrer bevorzugten Anwendung auf die Stapelung von Aluminium-Dosendeckeln gerichtet, zumal hier in besonderem Maße die Forderung nach sehr hohen Arbeits- bzw. Stapelgeschwindigkeiten besteht. Es versteht sich aber, daß die Erfindung auch für das Stapeln anderer Teile, insbesondere von Flachteilen, wie z.B. Platinen, Ronden, Formschnitten u.s.w., aus elektrisch leitfähigem, nicht-ferromagnetischem Werkstoff zur Anwendung kommen kann.

Die Erfindung wird nachfolgend im Zusammenhang mit dem in der Zeichnung dargestellten Ausführungsbeispiel einer erfindungsgemäßen Stapeleinrichtung näher erläutert. In der Zeichnung zeigen:
- Fig. 1: eine erfindungsgemäße Stapeleinrichtung in Seitenansicht, wobei der vertikale Stapelschacht im wesentlichen nur im oberen Kopfbereich, hier teilweise aufgebrochen, dargestellt ist;
- Fig. 2: eine Draufsicht zu Fig. 1;

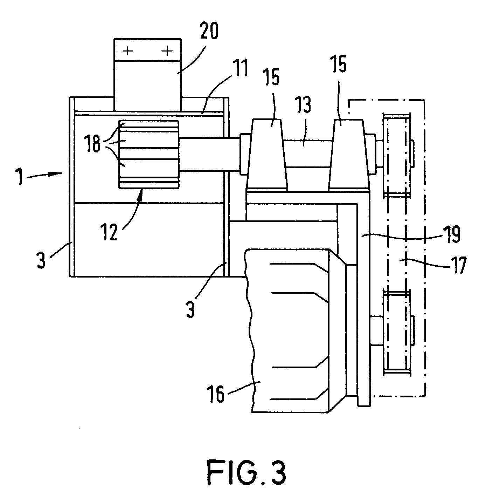

- Fig. 3: eine Ansicht des Pfeiles III der Fig. 2.

Die dargestellte Stapeleinrichtung dient zum Stapeln von Teilen aus elektrisch leitendem, nicht-ferromagnetischem Werkstoff, wie insbesondere Aluminium. Sie ist in ihrer bevorzugten Anwendung für das Stapeln von Aluminium-Dosendeckeln zur Bildung von Deckelpaketen bestimmt. Die Stapelung erfolgt mit Hilfe eines vertikal stehenden Stapelschachtes 1, dessen Innenquerschnitt der Umrißform der zu stapelnden Teile angepaßt ist. Im gezeigten Ausführungsbeispiel bestehen die zu stapelnden Teile aus in der Umrißform ovalen Aluminium-Dosendeckeln 2, wobei der Stapelschacht einen im wesentlichen rechteckigen Querschnitt mit einer Breite zwischen seinen parallelen Seitenwänden 3 aufweist, die nur geringfügig größer ist als die Breite der Deckel 2. Es versteht sich, daß die Aluminium-Dosendeckel 2 auch eine andere Umrißform aufweisen können, z.B. aus Runddeckeln bestehen können.

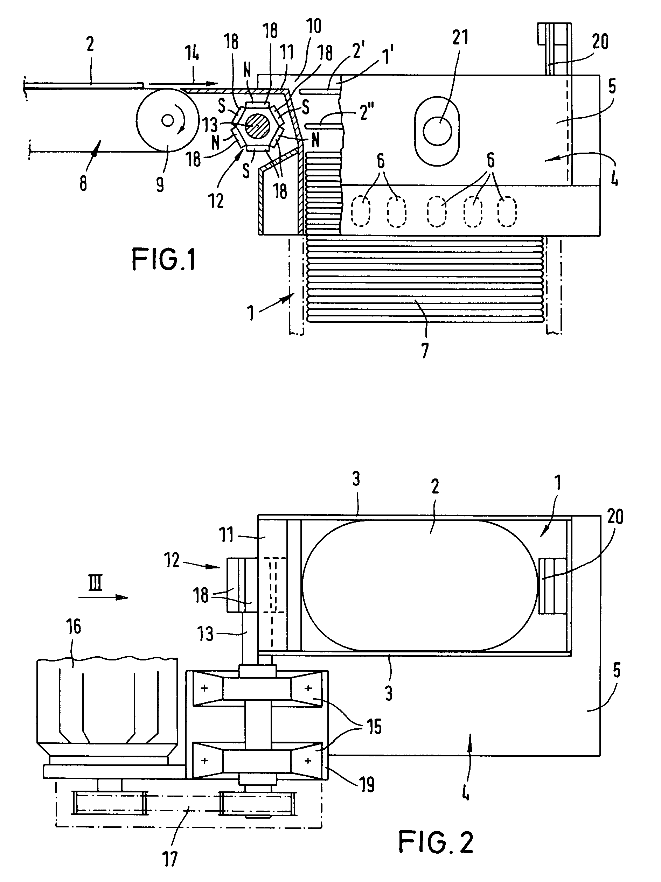

Das obere Ende des Stapelschachtes 1 ist in an sich bekannter Weise als Unterdruck-Stapelkopf 4 ausgebildet, der von einer den Stapelschacht ein- oder zweiseitig umschließenden Ansaugkammer 5 gebildet ist, in der mit Hilfe eines nicht-dargestellten Unterdruckerzeugers ein Unterdruck erzeugt wird. Die Ansaugkammer ist über Öffnungen 6 in der betreffenden Seitenwand 3 mit dem Kopfraum des Stapelschachtes 1 verbunden, so daß im Kopfraum ein Unterdruck erzeugt wird. In Fig. 1 ist der bereits im Stapelschacht 1 aufgestapelte Deckelstapel mit 7 bezeichnet, während die beiden zuletzt von oben in den Stapelschacht eingeführten Deckel mit 2' und 2'' bezeichnet sind. Die in den Kopfraum seitlich in den Stapelschacht eingeführten Deckel, also die Deckel 2' und 2'' werden durch den vom Unterdruck-Stapelkopf 4 im Stapelschacht erzeugten Unterdruck nach unten in Auflage auf den darunter befindlichen Deckelstapel 7 gezogen, so daß der Kopfraum für das Einführen der weiteren Deckel auch bei hohen Arbeits- bzw. Stapelgeschwindigkeiten stets frei ist.

Für die Zuführung der zu stapelnden Deckel 2 zu dem Stapelschacht 1 ist eine Zuführvorrichtung 8 vorgesehen, mit der die Deckel 2 in rascher Taktfolge in Flachlage von der Seite her in den Kopfraum 1' des Stapelschachtes 1 eingeführt werden. Die Zuführvorrichtung 8 besteht vorzugsweise aus einem Transportband, insbesondere einem Vakuum-Transportband, dessen übergabeseitige Umlenkrolle 9 sich in verhältnismäßig dichtem Abstand zu dem Stapelschacht 1 befindet. Die in Flachlage auf dem Transportband liegenden Aluminiumdeckel 2 werden dabei durch das erzeugte Vakuum auf dem rasch umlaufenden Transportband in ihrer vorschriftsmäßigen Lage fixiert. Solche Vakuum-Transportbänder sind bekannt. Im Abstand vor der Umlenkrolle 9 ist hierbei die Unterdruck-Einwirkung auf die Aluminiumdeckel 2 unwirksam, so daß es aufgrund der fehlenden Vakuumunterstützung im Deckeleinlaufbereich, d.h. auf der Strecke zwischen dem Übergabebereich des Transportbandes und dem Kopfraum 1' des Stapelschachtes 1 zu einem Geschwindigkeitsverlust der zulaufenden Deckel 2 durch Reibung an den Führungsflächen kommen kann und die Deckel 2 im Zulaufbereich ihre Lage verändern können, z.B. verkanten oder sogar umschlagen können, was normalerweise zu einer Betriebsstörung der Stapeleinrichtung führt. Insbesondere aus Fig. 1 ist erkennbar, daß der Stapelschacht an seinem oberen Ende eine seitliche Deckel-Einlauföffnung 10 zwischen den Seitenwänden 3 aufweist, die am Boden durch ein Gleitblech 11 od.dgl. begrenzt wird, über das hinweg die Deckel 2 beim Einführen in den Stapelschacht bzw. dessen Kopfraum 1' hinweggleiten. Dieses Gleitblech 11 kann, wie in Fig. 1 angedeutet, bis in Nähe der Umkehrrolle 9 reichen.

Im Zulaufbereich der Deckel 2 zu dem Kopfraum 1' des Stapelschachtes 1 ist unmittelbar unterhalb des Gleitblechs 11 als Antrieb bzw. Wirbelstromerzeuger ein permanentmagnetisches Polrad 12 angeordnet, und zwar gem. Fig. 2 in der verlängerten Mittelachse des Stapelschachtes. Das Polrad 12 sitzt auf einer horizontalen Welle 13, deren Wellenachse rechtwinklig zur vertikalen Achse des Stapelschachtes 1 und auch rechtwinklig zur Zuführungsrichtung der Deckel 2 verläuft, die in Fig. 1 durch den Pfeil 14 angegeben ist. Die Welle ist in Stehlagern 15 gelagert und wird von einem z.B. elektrischen Antriebsmotor 16 über einen Zahnriementrieb 17 angetrieben.

Das Polrad 12 weist um die Welle 13 herum radial ausgerichtete Permanentmagnete 18 in kreuz- oder sternförmiger Anordnung und mit in Umfangsrichtung wechselnden Magnetpolen N und S auf, wobei die Anzahl der wechselnden Magnetpole von 2-bis n-polig ausgeführt werden kann. Im gezeigten Ausführungsbeispiel sind sechs Permanentmagnete 18 vorgesehen. Jeder dieser Permanentmagnete kann auch von mehreren radial zur Wellenachse übereinander angeordneten Einzelmagneten gebildet sein kann.

Das Polrad 12 nebst Welle 13, Wellenlagern 15, Antriebsmotor 16 und Zahnriementrieb 17 ist auf der Seite des Deckeleinlaufs am Stapelschacht 1 außenseitig angebaut, und zwar mit Hilfe einer Konsole 19, welche die Lager 15 trägt und an denen der Antriebsmotor 16 angeflanscht ist.

Auf der dem Deckeleinlauf gegenüberliegenden Seite des Stapelschachtes ist im Inneren des Kopfraumes 1' ein Dämpfungsanschlag 20 angeordnet, der z.B. aus einer von oben in den offenen Stapelschacht bzw. dessen Kopfraum 1' eintauchenden Federelement besteht, gegen welches die in Pfeilrichtung 14 in den Kopfraum 1' einlaufenden Deckel 2 stoßen, wodurch deren Bewegungsenergie abgefedert wird.

Im Betrieb werden die Deckel über die aus dem Vakuum-Transportband bestehende Zuführvorrichtung 8 in rascher Folge in Pfeilrichtung 14 und in der Flachlage über die Einlauföffnung 10 von der Seite her in den Kopfraum 1' des Stapelschachtes 1 eingeführt, wobei sie über das Gleitblech 11 od.dgl. hinweggleiten und sich seitlich an den Seitenwänden 3 führen. Das Polrad 12 wird von seinem Antriebsmotor 16 über den Zahnriementrieb 17 mit hoher Drehgeschwindigkeit angetrieben, die z.B. in der Größenordnung von 500-5000 U/min. liegt. Hierbei erzeugt es ein permanentmagnetisches Wechselfeld, das in den dem Stapelschacht 1 zulaufenden Aluminiumdeckeln 2 einen Wirbelstrom erzeugt, der seinerseits ein dem äußeren Wechselfeld entgegenwirkendes Wirbelstrom-Magnetfeld aufbaut, welches aufgrund der magnetischen Abstoßung der beiden Magnetfelder an den Deckeln 2 eine Bewegungs- bzw. Beschleunigungskraft erzeugt. Die Wirbelstrombildung in den in Pfeilrichtung 14 bewegten Aluminiumdeckeln 2 erteilt somit diesen Beschleunigungsimpuls in Richtung auf die Stapelstelle, d.h. in Einlaufrichtung gemäß Pfeil 14, wodurch die vom VakuumTransportband ablaufenden Deckel 2 auf der Strecke zum Kopfraum 1' mit erhöhter Geschwindigkeit in den Kopfraum 1' getrieben werden. Hierbei laufen die Deckel 2, in Fig. 1 der Deckel 2' gegen den Dämpfungsanschlag 20. Durch die vorstehend beschriebene Unterdruckwirkung werden dann die Deckel im Kopfraum 1' nach unten zur Ablage auf das bereits gebildete Stapelpaket 7 gezogen.

Es ist erkennbar, daß das permanentmagnetische Polrad 12 einen Wirbelstrombeschleuniger bildet, welches die zulaufenden Aluminiumdeckel 2 mit hoher Geschwindigkeit in den Kopfraum 1' des Stapelschachtes 1 treibt, wodurch Störungen bei der Deckelzuführung zu dem Stapelschacht auch bei hohen Arbeits- bzw. Stapelgeschwindigkeiten ausgeschlossen werden. Am Stapelschacht 1 bzw. dessen Stapelkopf kann ein den Stapelvorgang abtastender Sensor 21 zur Betriebskontrolle angeordnet sein.

## Patentansprüche

1. Verfahren zum Stapeln von Teilen aus elektrisch leitendem, nicht-ferromagnetischem Werkstoff, insbesondere von Aluminium-Dosendeckeln, wobei die Teile mittels einer Zuführvorrichtung in Aufeinanderfolge der Stapelstelle zugeführt und lagegerecht an die Stapelstelle übergeben werden, **dadurch gekennzeichnet, daß** den Teilen (2) im Zulaufbereich zu der Stapelstelle durch Wirbelstrombildung ein Beschleunigungsimpuls in Richtung auf die Stapelstelle erteilt wird.

2. Verfahren nach Anspruch 1, **dadurch gekennzeichnet, daß** die gerichteten Beschleunigungsimpulse mit Hilfe eines mit Permanentmagneten bestückten, vorzugsweise mit einer Drehzahl von 500-5000 U/min. rotierenden Polrades (12) erzeugt werden.

3. Verfahren nach Anspruch 1 oder 2, **dadurch gekennzeichnet, daß** die Teile (2) mittels einer aus einem Vakuum-Transportband bestehenden Zuführvorrichtung (8) der Stapelstelle zugeführt werden, wobei ihnen die Beschleunigungsimpulse durch Wirbelstrombildung auf der Strecke erteilt werden, auf der im Einlaufbereich zur Stapelstelle keine Unterdruckhaftung der Teile (2) an dem Transportband mehr gegeben ist.

4. Einrichtung zur Durchführung des Verfahrens nach einem oder mehreren der Ansprüche 1 bis 3 unter Verwendung eines Stapelschachtes zur Stapelung der Teile und einer die Teile dem oberen Einlauf des Stapelschachtes in Aufeinanderfolge quer zur Achse des Stapelschachtes zuführenden Zuführvorrichtung, **dadurch gekennzeichnet, daß** im Zulaufbereich zu dem Stapelschacht (1) ein Wirbelstromerzeuger (12) angeordnet ist, der den Teilen (2) auf der Zulaufstrecke in Zulaufrichtung (Pfeil 14) wirkende Beschleunigungsimpulse erteilt.

5. Einrichtung nach Anspruch 4, **dadurch gekennzeichnet, daß** der Stapelschacht (1) mit einem Unterdruck-Stapelkopf (4) versehen ist.

6. Einrichtung nach Anspruch 4 oder 5, **dadurch gekennzeichnet, daß** der Wirbelstromerzeuger aus einem mit Permanentmagneten (18) bestückten rotierenden Polrad (12) mit radial ausgerichteten Permanentmagneten (18) besteht, deren Magnetpole (N und S) in Umfangsrichtung wechseln.

7. Einrichtung nach Anspruch 6, **dadurch gekennzeichnet, daß** das Polrad (12) von seinem Antrieb (16) um eine horizontale Drehachse angetrieben ist, die quer zur Einlaufrichtung (Pfeil 14) der Teile (2) verläuft.

8. Einrichtung nach einem der Ansprüche 4 bis 7, **dadurch gekennzeichnet, daß** der Wirbelstromerzeuger bzw. das Polrad (12) einlaufseitig im Kopfbereich des Stapelschachtes (1) unterhalb einer Einlauf-Gleitplatte (11) od.dgl. angeordnet ist.

9. Einrichtung nach einem der Ansprüche 4 bis 8, **dadurch gekennzeichnet, daß** an der der Einlaufseite gegenüberliegenden Seite des Stapelschachtes (1) ein Dämpfungsanschlag (20) für die Teile angeordnet ist.

10. Einrichtung nach einem der Ansprüche 4 bis 9, **dadurch gekennzeichnet, daß** der Stapelschacht (1) mit die in seinen Kopfraum (1') einlaufenden Teile (2) seitlich führenden Führungselementen, z.B. Seitenwandführungen (3), versehen ist.

11. Einrichtung nach einem der Ansprüche 4 bis 10, **dadurch gekennzeichnet, daß** die Zuführvorrichtung (8) aus einem angetriebenen, vorzugsweise horizontalen Vakuum-Transportband besteht, auf dem die Teile (2) in Flachlage und durch Unterdruck fixiert dem Stapelschacht (1) und dem Wirkungsbereich des Wirbelstromerzeugers (12) zugeführt werden.

12. Einrichtung nach einem der Ansprüche 4 bis 11, **dadurch gekennzeichnet, daß** im Kopfbereich des Stapelschachtes (1) eine an einem Vakuumerzeuger angeschlossene Ansaugkammer (5) vorgesehen ist, die über Durchbrechungen (6) mit dem Innenraum des Stapelschachtes verbunden ist.

13. Einrichtung nach einem der Ansprüche 4 bis 12, **dadurch gekennzeichnet, daß** der Wirbelstromerzeuger bzw. das Polrad (12) nebst Antrieb (16) außenseitig am Stapelschacht (1) angebaut ist.

14. Einrichtung nach einem der Ansprüche 4 bis 13, **dadurch gekennzeichnet, daß** als Wirbelstromerzeuger ein elektrischer Linearmotor vorgesehen ist.
